# FASCICULE DE BREVET EUROPEEN

(11) **EP 1 458 514 B1**
(45) Date de publication et mention de la délivrance du brevet: **08.10.2008**
(21) Numéro de dépôt: 02782610.6
(22) Date de dépôt: 16.12.2002
(51) Int. Cl.: B23K 13/02

(54) **DISPOSITIF DE SOUDAGE POUR MATERIAU D'EMBALLAGE**
VORRICHTUNG ZUM SCHWEISSEN VON VERPACKUNGSMATERIAL
HEAT-SEALING DEVICE FOR PACKAGING MATERIAL

(30) Priorité: 20.12.2001 CH 23552001
(43) Date de publication de la demande: 22.09.2004
(73) Titulaire: Aisapack Holding SA, 1896 Vouvry (CH)
(72) Inventeur: THOMASSET, Jacques, F-74500 Neuvecelle (FR)
(74) Mandataire: Besse, François
(86) Numéro de dépôt international: PCT/CH2002/000699
(87) Numéro de publication internationale: WO 2003/053626

(56) Documents cités:
- FR-A- 2 073 137
- US-A- 2 632 079
- US-A- 3 406 271
- US-A- 4 694 134
- US-A- 5 571 437

## Description

### Domaine de l'invention

La présente invention se rapporte à un dispositif de soudage pour matériau d'emballage en déplacement. Le matériau d'emballage est constitué d'au moins une couche de matière thermoplastique et d'une couche que l'on peut chauffer par induction électromagnétique (p.ex. métallique ou à base de polymère). Le dispositif comprend un générateur de courant alternatif et une bobine pour transformer le courant alternatif en un champ magnétique. Les lignes du champs magnétique sont orientées de manière à traverser le matériau d'emballage, générant ainsi des courants de Foucault dans la couche métallique, la chaleur résultant de ce phénomène est utilisée pour fondre une portion (la zone de soudage) de la couche en matière thermoplastique.

### Etat de la technique

La demande de brevet français No 2.073.137 de TETRA PAK présente un inducteur pour le soudage de tubes contenant un barreau de ferrite, ceci afin d'augmenter l'induction de la bobine.

La demande de brevet français No 2 429 657 de AMERICAN CAN COMPANY présente un inducteur pour le soudage de tubes caractérisé par le fait que le mandrin interne, qui sert de guide pour le déplacement des tubes, comporte sur sa longueur un barreau du type ferrite, ceci afin de réaliser une soudure localisée selon une bande étroite orientée selon la direction de déplacement des tubes.

La bobine est disposée autour du tube en formation.

Le brevet américain No 3,242,300 de OHIO CRANKSHAFT COMPANY décrit un inducteur pour le soudage en spirale de tubes. De part et d'autre de la surface à souder sont disposés des éléments de type ferrite afin d'assurer une soudure selon une courbe continue.

Dans les dispositifs de l'état de la technique, les boucles de champ magnétique générées par la bobine ne sont que partiellement canalisées à l'aide d'éléments ferromagnétique. Il en résulte que certaines lignes de champ magnétique traversent le matériau d'emballage en des endroits qui ne correspondent pas à la zone de soudage. Le chauffage de ces régions incontrôlées peut engendrer des déformation dans le matériau d'emballage, p.ex. des ondulations.

### Résumé de l'invention

La présente invention a le mérite de remédier notamment au problème précité en offrant un chauffage plus ciblé au niveau de la zone de soudage. Elle concerne un dispositif de soudage d'un matériau d'emballage en déplacement comprenant une couche que l'on peut chauffer par induction électromagnétique (p.ex. métallique ou à base de polymère) et une couche de matière thermoplastique incorporant une zone de soudage qui s'étend selon la direction du déplacement du matériau d'emballage; le dispositif de soudage comprenant un générateur de courant alternatif, une bobine pour transformer le courant alternatif en un champ magnétique, un élément ferromagnétique pour canaliser les lignes du champ magnétique selon une direction déterminée, le champ magnétique étant orienté de manière à traverser le matériau d'emballage pour induire un chauffage de la couche que l'on peut chauffer par induction électromagnétique; le dispositif de soudage étant caractérisé par le fait qu'il comprend un ensemble d'éléments ferromagnétiques qui sont disposés de manière à ce que les lignes de champ magnétique traversent le matériau d'emballage en au moins deux régions distinctes situées le long de la zone de soudage.

Comme on le verra par la suite, le chauffage localisé en deux régions distinctes est particulièrement avantageux.

Selon un mode préférentiel de réalisation de l'invention, un premier élément ferromagnétique est disposé d'un côté du matériau d'emballage, par exemple du côté de la face interne de l'emballage en formation. Le premier élément ferromagnétique est disposé de telle manière à ce que ses deux extrémités se trouvent à proximité des deux régions de chauffage. Dans le prolongement des ces extrémités, mais de l'autre côté du matériau d'emballage, se trouve respectivement un deuxième et un troisième élément ferromagnétique dont l'une des extrémités se trouve à proximité des régions de chauffage. Il en résulte que dans l'environnement des régions de chauffage, les lignes de champ magnétique sont canalisées.

Selon un mode particulièrement avantageux de réalisation de l'invention, le deuxième et le troisième élément ferromagnétique sont reliés entre eux par l'intermédiaire d'un quatrième élément ferromagnétique, une bobine entourant soit le deuxième, soit le troisième ou soit le quatrième élément ferromagnétique, L'ensemble d'élément ainsi réalisé forme un circuit ferromagnétique canalisant de la sorte les boucles de champ magnétique induites par la bobine.

Il convient de relever que contrairement au dispositif de l'état de la technique décrit dans US 3,242,300 qui présente une région de chauffage d'étendant sur une courbe, le dispositif selon l'invention vise à chauffer deux régions distinctes. Cette façon de procéder signifie que lors de son déplacement, le matériau d'emballage, au niveau de sa zone de soudage, subira un premier chauffage suivi d'une interruption et d'un deuxième chauffage.

Afin de démontrer l'intérêt d'une zone de "relaxation", on peut comparer deux conceptions de dispositifs de chauffage, la première, telle qu'illustrée dans US 3,242,300 présente une région de chauffage unique s'étendant sur une longueur L, la deuxième, selon l'invention, présentant une première région (longueur) de chauffage L₁, suivie d'une région (longueur) d'interruption L₂ et d'une région (longueur) de chauffage L₃.

Le premier dispositif est défini par
- L = 60 mm
- On fixe la température de la feuille d'aluminium à 140°C en sortie d'inducteur. Expérimentalement, cela revient à ajuster la puissance fournie à l'inducteur.

Le deuxième dispositif est défini par
- L1 = 30 mm
- L2 = 30mm
- L3 = 30mm
- La puissance fournie au deuxième dispositif est identique à la puissance fournie au premier dispositif (à vitesse de ligne équivalente)

La feuille à souder comporte principalement 3 couches
- Polyéthylène/alu/polyéthylène
- 150 microns/12 microns/75 microns

| Vitesse (m/min) | Température (°C) de l'interface à souder à la sortie du premier dispositif | Température (°C) de l'interface à souder à la sortie du deuxième dispositif |
|---|---|---|
| 20 | 138 | 139 |
| 40 | 126 | 135 |
| 60 | 111 | 124 |
| 80 | 103 | 117 |

Plus la vitesse de déplacement est importante, plus il faut fournir l'énergie thermique rapidement. La feuille d'aluminium s'échauffe quasi-instantanément. Par contre, la couche de polymère n'est pas chauffée uniformément dans son épaisseur lorsque la vitesse est élevée (la diffusion thermique dans le polymère est plus lente). La zone transitoire « de relaxation » (L2) permet aux calories de la couche d'aluminium de diffuser dans le polymère et diminuer ainsi le gradient thermique entre les couches d'aluminium et l'interface à souder.

### Brève description des figures

Quelques exemples non-limitatifs de l'invention sont décrits ci-après au moyen des figures suivantes :
La figure 1 illustre une vue de face d'un premier mode de réalisation selon l'invention.
La figure 2 illustre une vue de face d'un deuxième mode de réalisation selon l'invention.
La figure 3 illustre une coupe transversale, selon la ligne III-III, du mode de réalisation de la figure 2.
La figure 4 illustre une vue de face d'un troisième mode de réalisation selon l'invention.
La figure 5 montre une coupe transversale d'une tige de soudage selon un autre mode de réalisation de l'invention.

Chaque élément commun à chaque figure porte la même référence numérique.

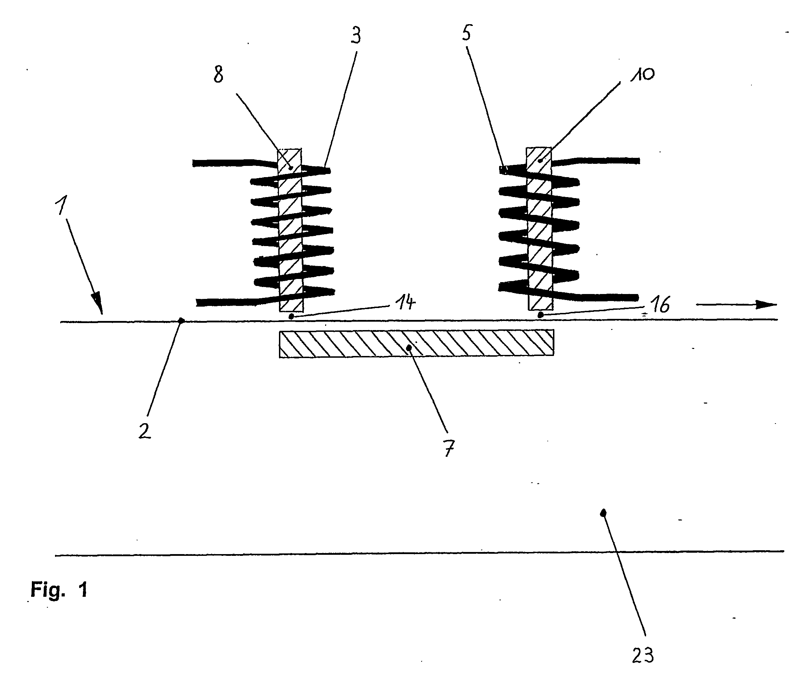

La figure 1 montre un tube 1 en déplacement dans un dispositif de chauffage. Le tube 1 est réalisé à partir d'une feuille enroulée autour d'une tige de soudage 23, les bords de la feuille sont superposés et soudés par chauffage lors de leur passage à travers le dispositif de chauffage. La paroi du tube 1 est constituée d'au moins une couche métallique et d'une couche en matière thermoplastique. Comme indiqué précédemment, la présence d'une couche métallique est nécessaire pour induire des courants de Foucault générateurs de chaleur, cette dernière étant utilisée pour faire fondre une portion de la couche thermoplastique et assurer ainsi une soudure.

Dans le présent exemple, a zone de soudage 2 s'étend selon la direction de déplacement du tube 1.

Le dispositif de chauffage comprend un premier barreau ferromagnétique 7, en ferrite par exemple, incorporé dans la tige de soudage 23 et disposé du côté interne du tube 1, à proximité de la zone de soudage 2. Un deuxième 8 et troisième barreau ferromagnétique 10 sont disposés en-dessus du premier barreau 7, de manière à ce qu'une extrémité du deuxième barreau 8 se situe dans le prolongement d'une extrémité du premier barreau 7 et qu'une extrémité du troisième barreau 10 se situe dans le prolongement de l'autre extrémité du premier barreau 7. Le deuxième 8 et le troisième barreau 10 sont chacun entourés d'une bobine 3,5.

La disposition des trois barreaux 7,8,10, en forme de U, permet d'obtenir un chauffage essentiellement localisé au niveau des régions 14,16, la première région 14 étant définie entre une extrémité du premier barreau 7 et une extrémité du deuxième barreau 8, la deuxième région 16 étant définie entre l'autre extrémité du premier barreau 7 et une extrémité du troisième barreau 10. La distance formée entre ces deux couples d'extrémités peut varier entre 2 et 200 fois l'épaisseur de la feuille d'emballage à souder, et de préférence entre 2 et 50 fois.

Ainsi, pour un point se situant sur le tube 1 au niveau de sa zone de soudage 2, un premier chauffage a lieu au niveau de la région 14 située entre une extrémité du premier barreau 7 et une extrémité du deuxième barreau 8. S'en suit une période de repos puis une un nouveau chauffage au niveau de la région 16 située entre l'autre extrémité du premier barreau 7 et une extrémité du troisième barreau 10.

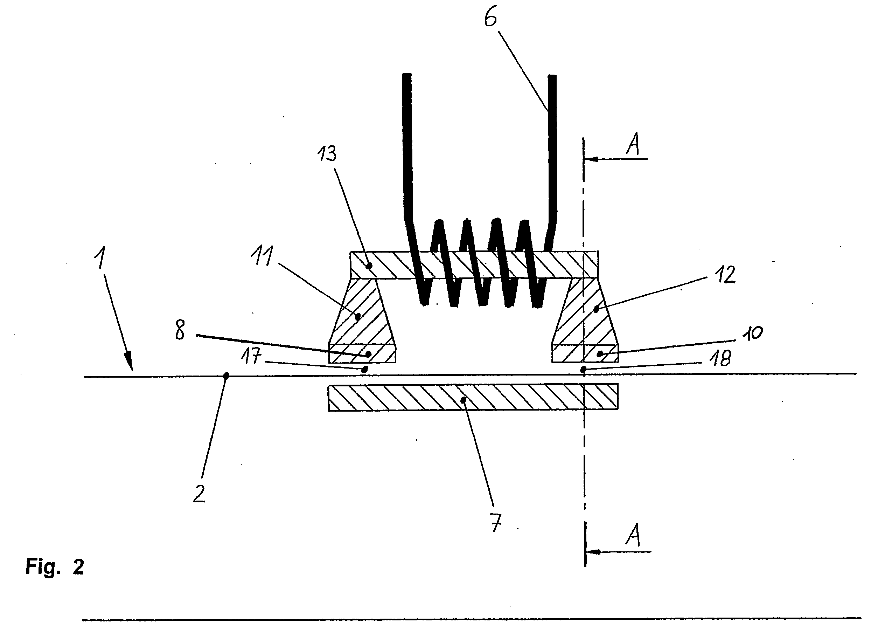

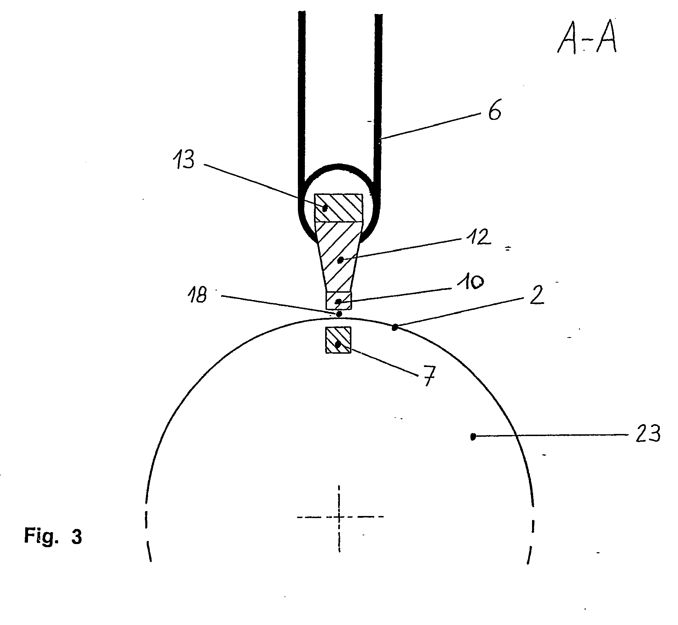

Les dispositifs illustrés sur les figures 2 à 4 sont similaires à celui de la figure 1. Ils diffèrent cependant en ce que l'ensemble des éléments ferromagnétiques forment une boucle fermée, les lignes du champ magnétique étant par conséquent canalisées sur l'ensemble de leurs boucles.

Les deuxième 11 et troisième barreau ferromagnétique 12 sont reliés entre eux par l'intermédiaire d'un quatrième barreau 13 disposé parallèlement à la direction de déplacement du tube 1. Le quatrième barreau est entouré d'une bobine 6.

La bobine 6 peut également être disposée autour du deuxième 11 ou du troisième barreau ferromagnétique 12.

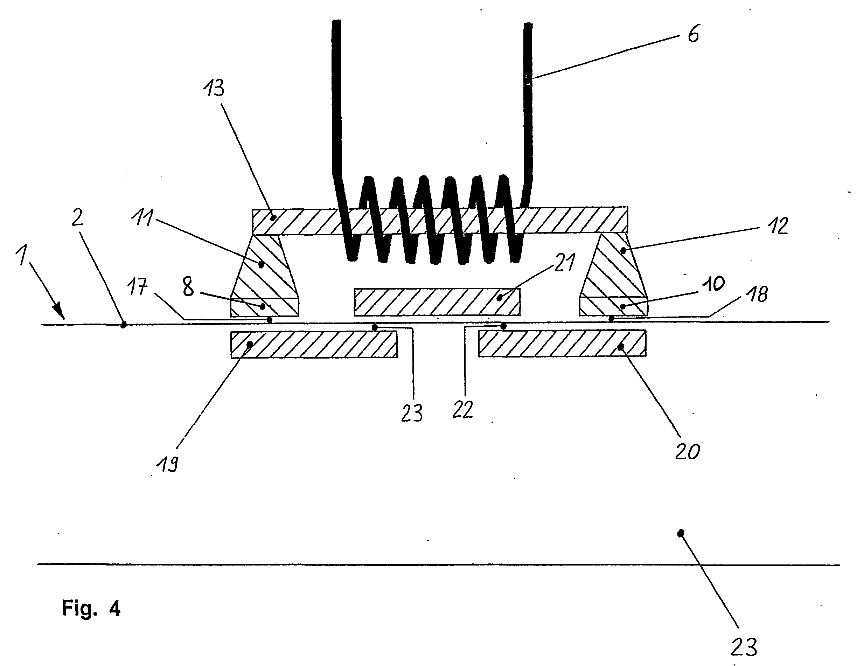

Le dispositif illustré à la figure 4 se différencie uniquement de celui de la figure 2 en ce que le premier barreau 7 est remplacé par un groupe de 3 barreaux 19-21 disposés alternativement de chaque côté de la paroi du tube 1, les extrémités des barreaux 19-21 se superposant deux à deux.

Les tiges de soudage de l'état de la technique sont le plus souvent constituées d'un noyau en acier entouré d'un manchon en plastique.

La présence de barreaux ferromagnétiques (7,19,21) dans la tige de soudage 23 permet certes de canaliser la plus grande partie des lignes de champs magnétique à l'intérieur des barreaux.

Il arrive cependant que certaines lignes de champs se déplacent également dans le manchon en plastique, la performance du chauffage dans les zones de soudage étant par conséquent diminuée.

Afin de minimiser, voire éliminer, cet inconvénient, la tige de soudage 23 peut être constituée exclusivement d'un matériau formant écran tel que du cuivre ou de l'aluminium.

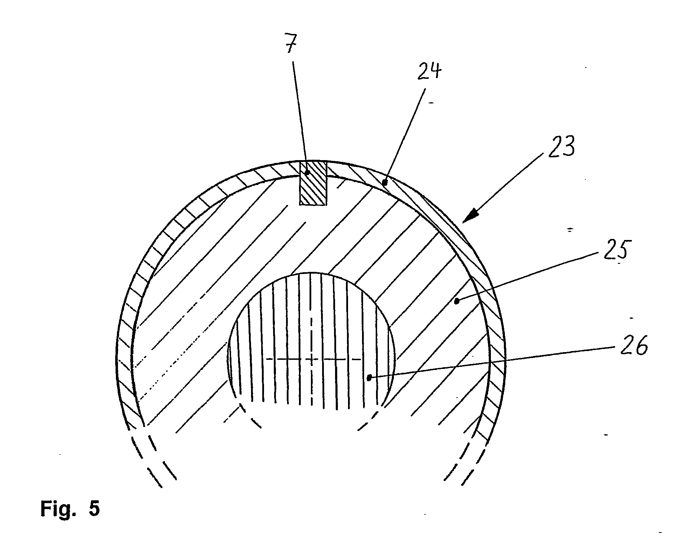

Alternativement (voir la figure 5), la tige peut comprendre un noyau d'acier 26 entouré d'un manchon en plastique 25 qui est lui-même entouré d'une enveloppe 24 en cuivre ou en aluminium, les barreaux ferromagnétiques (7,19,21) étant disposés exclusivement dans l'enveloppe externe 24 et dans le manchon en plastique 25. L'effet résultant est le même que dans le cas de figure précédent, à savoir que l'élément en cuivre ou en aluminium joue le rôle d'écran pour les lignes de champs magnétique.

Il convient de relever que la présente invention s'applique à tout laminé comprenant au moins une feuille métallique (p.ex. en aluminium) et une feuille de matière thermoplastique.

A titre d'exemple non limitatif de laminés pouvant être utilisés, on peut citer les combinaisons suivantes (décrites de l'extérieur vers l'intérieur du tube) :
1) Film en polyéthylène (blanc) de 130 microns d'épaisseur- Polyéthylène (blanc) de 27 microns d'épaisseur - Copolymère (blanc) de 16 microns d'épaisseur - Feuille d'aluminium de 12 microns- Copolymer (transparent) de 30 microns d'épaisseur - Film spécial en polyéthylène (transparent) de 60 microns d'épaisseur.
2) Polyéthylène (blanc) de 90 microns d'épaisseur - Copolymère (blanc) de 65 microns d'épaisseur - Feuille d'aluminium de 40 microns d'épaisseur - Copolymère (transparent) de 40 microns d'épaisseur - Polyéthylène spécial (transparent) de 75 microns d'épaisseur.
3) Polyéthylène (blanc) de 110 microns d'épaisseur - Copolymère (blanc) de 45 microns d'épaisseur - Feuille d'aluminium de 40 microns d'épaisseur - Copolymère (transparent) de 40 microns d'épaisseur - Polyéthylène spécial (Coex) de 75 microns d'épaisseur.

## Revendications

1. Dispositif de soudage d'un matériau d'emballage (1) en déplacement comprenant une couche que l'on peut chauffer par induction électromagnétique et une couche de matière thermoplastique incorporant une zone de soudage (2) qui s'étend selon la direction du déplacement du matériau d'emballage; le dispositif de soudage comprenant un générateur de courant alternatif, une bobine (3,5,6) pour transformer le courant alternatif en un champ magnétique, un élément ferromagnétique (7,8,10-13) pour canaliser les lignes du champ magnétique selon une direction déterminée, le champ magnétique étant orienté de manière à traverser le matériau d'emballage (1) pour induire un chauffage de la couche que l'on peut chauffer par induction électromagnétique; le dispositif de soudage étant **caractérisé en ce qu'**un premier élément ferromagnétique (7) est disposé à proximité d'un côté du matériau d'emballage (1) de manière à ce que chacune de ses extrémités se situe à proximité d'une, respectivement l'autre, des régions distinctes (14,16-18) définies d'une part, entre une extrémité du premier élément ferromagnétique (7) et une extrémité d'un deuxième élément ferromagnétique (8,10-12) et, d'autre part entre l'autre extrémité du premier élément ferromagnétique (7) et une extrémité d'un troisième élément ferromagnétique (8,10-12), et que lesdits deuxième et troisième éléments ferromagnétiques (8,10-12), sont disposés de l'autre côté du matériau d'emballage (1) de façon à ce que l'une des extrémités du deuxième élément (8,10-12) soit située à proximité de l'une desdites régions distinctes (14,16-18) et **en ce que** l'une des extrémités du troisième élément (8,10-12) soit située à proximité de l'autre desdites régions distinctes (14,16-18), ladite zone de soudage du matériau d'emballage se déplaçant de telle manière qu'elle subit lors de son déplacement un premier chauffage dans une première région distincte suivi d'une interruption dans une région d'interruption et d'un deuxième chauffage dans une deuxième région distincte.

2. Dispositif selon la revendication précédente **caractérisé par le fait que** les extrémités des trois éléments ferromagnétiques (7,8,10) disposées à proximité et de part et d'autre de la couche à souder sont séparées d'une distance représentant entre 2 et 200 fois, de préférence entre 2 et 50 fois, l'épaisseur de la couche à souder.

3. Dispositif selon la revendication 1 ou 2 **caractérisé par le fait que** le deuxième (8,10-12) et le troisième élément ferromagnétique (8,10-12) sont entourés d'une bobine (3,5,6).

4. Dispositif selon l'une quelconque des revendications précédentes **caractérisé par le fait que** l'ensemble des éléments ferromagnétiques (7,8,10,11, 19-21) forme un circuit ferromagnétique, une bobine (6) entourant un élément ferromagnétique (7,8,10,11,19-21).

5. Dispositif selon l'une quelconque des revendications précédentes **caractérisé par le fait qu'**il comprend un ou plusieurs écrans magnétiques disposé entre des éléments ferromagnétiques (7,8,10,11,19-21) non-adjacents.

6. Dispositif selon l'une quelconque des revendications précédentes **caractérisé par le fait qu'**une partie des barreaux ferromagnétiques (7,19,21) est disposé dans une tige de soudage 23, cette dernière comprenant un élément écran, par exemple en cuivre ou en aluminium, disposé de manière à confiner les lignes de champs dans les barreaux ferromagnétiques (7,19,21).

## Claims

1. Device for welding a moving packaging material (1) comprising a layer that can be heated by electromagnetic induction and a thermoplastic layer incorporating a welding zone (2) which lies in the direction of movement of the packaging material; the welding device comprising an alternating current generator, a coil (3, 5, 6) for transforming the alternating current into a magnetic field, a ferromagnetic element (7, 8, 10-13) for channelling the magnetic field lines in a specific direction, the magnetic field being oriented so as to cross the packaging material (1) in order to induce heating of the layer that can be heated by electromagnetic induction; the welding device being **characterized in that** a first ferromagnetic element (7) is placed close to one side of the packaging material (1) so that each of its ends is located close to one or the other of the distinct regions (14, 16-18) defined, on the one hand, between one end of the first ferromagnetic element (7) and one end of a second ferromagnetic element (8, 10-12) and, on the other hand, between the other end of the first ferromagnetic element (7) and one end of a third ferromagnetic element (8, 10-12), and that the said second and third ferromagnetic elements (8, 10-12) are placed on the other side of the packaging material (1) so that one of the ends of the second element (8, 10-12) is located close to one of the said distinct regions (14, 16-18) and **in that** one of the ends of the third element (8, 10-12) is located close to the other of the said distinct regions (14, 16-18) the said welding zone of the packaging material moving in such a manner that it undergoes, during its movement, a first heating in a first distinct region followed by an interruption in an interruption region and by a second heating in a second distinct region.

2. Device according to the preceding claim, **characterized in that** the ends of the three ferromagnetic elements (7, 8, 10) placed close to and on either side of the layer to be welded are separated by a distance representing between 2 and 200 times, preferably between 2 and 50 times, the thickness of the layer to be welded.

3. Device according to Claim 1 or 2, **characterized in that** the second (8, 10-12) and the third (8, 10-12) ferromagnetic element are surrounded by a coil (3, 5, 6).

4. Device according to any one of the preceding claims, **characterized in that** the set of ferromagnetic elements (7, 8, 10, 11, 19-21) forms a ferromagnetic circuit, a coil (6) surrounding a ferromagnetic element (7, 8, 10, 11, 19-21).

5. Device according to any one of the preceding claims, **characterized in that** it comprises one or more magnetic screens placed between non-adjacent ferromagnetic elements (7, 8, 10, 11, 19-21).

6. Device according to any one of the preceding claims, **characterized in that** part of the ferromagnetic bars (7, 19, 21) is placed in a welding rod 23, the latter comprising a screen element, for example made of copper or of aluminium, placed so as to contain the field lines in the ferromagnetic bars (7, 19, 21).

## Patentansprüche

1. Schweißvorrichtung für ein Verpackungsmaterial (1) in Bewegung, umfassend eine Schicht, die man durch elektromagnetische Induktion erhitzen kann, und eine Schicht aus Thermoplastwerkstoff, die eine Schweißzone (2) enthält, die sich gemäß der Richtung der Bewegung des Verpackungsmaterials erstreckt, wobei die Schweißvorrichtung einen Wechselstromgenerator, eine Spule (3, 5, 6) zum Umformen des Wechselstroms in ein Magnetfeld, ein ferromagnetisches Element (7, 8, 10-13) zum Kanalisieren der Linien des Magnetfelds gemäß einer bestimmten Richtung umfasst, wobei das Magnetfeld so ausgerichtet ist, dass es das Verpackungsmaterial (1) durchquert, um ein Erhitzen der Schicht zu bewirken, die man durch elektromagnetische Induktion erhitzen kann, wobei die Schweißvorrichtung **dadurch gekennzeichnet ist, dass** ein erstes ferromagnetisches Element (7) in der Nähe einer Seite des Verpackungsmaterials (1) derart angeordnet ist, dass sich jedes seiner Enden in der Nähe der einen bzw. der anderen der getrennten Regionen (14, 16-18) befindet, die einerseits zwischen einem Ende des ersten ferromagnetischen Elements (7) und einem Ende eines zweiten ferromagnetischen Elements (8, 10 - 12) und andererseits zwischen dem anderen Ende des ersten ferromagnetischen Elements (7) und einem Ende eines dritten ferromagnetischen Elements (8, 10 - 12) definiert sind, und dass das zweite und das dritte ferromagnetische Element (8, 10-12) auf der anderen Seite des Verpackungsmaterials (1) derart angeordnet sind, dass eines der Enden des zweiten Elements (8, 10 - 12) in der Nähe einer der getrennten Regionen (14, 16-18) liegt, und dass eines der Enden des dritten Elements (8, 10 - 12) in der Nähe der anderen der getrennten Regionen (14, 16-18) liegt, wobei sich die Schweißzone des Verpackungsmaterials so verschiebt, dass sie bei ihrer Verschiebung einer ersten Erhitzung in einer ersten getrennten Region unterzogen wird, wonach eine Unterbrechung in einer Unterbrechungsregion und eine zweite Erhitzung in einer zweiten getrennten Region folgt.

2. Vorrichtung nach dem vorhergehenden Anspruch, **dadurch gekennzeichnet, dass** die Enden der drei ferromagnetischen Elemente (7, 8, 10), die in der Nähe und zu beiden Seiten der zu schweißenden Schicht angeordnet sind, durch eine Entfernung getrennt sind, die zwischen 2 und 200 Mal, vorzugsweise zwischen 2 und 50 Mal die Stärke der zu schweißenden Schicht darstellt.

3. Vorrichtung nach Anspruch 1 oder 2, **dadurch gekennzeichnet, dass** das zweite (8, 10-12) und das dritte elektromagnetische Element (8, 10-12) von einer Spule (3, 5, 6) umgeben sind.

4. Vorrichtung nach einem der vorhergehenden Ansprüche, **dadurch gekennzeichnet, dass** die Einheit der ferromagnetischen Elemente (7, 8, 10, 11, 19-21) einen ferromagnetischen Kreislauf bildet, wobei eine Spule (6) ein ferromagnetisches Element (7, 8, 10, 11, 19-21) umgibt.

5. Vorrichtung nach einem der vorhergehenden Ansprüche, **dadurch gekennzeichnet, dass** sie einen oder mehrere Magnetschirme umfasst, der oder die zwischen den ferromagnetischen Elementen (7, 8, 10, 11, 19-21), die nicht benachbart sind, angeordnet sind.

6. Vorrichtung nach einem der vorhergehenden Ansprüche, **dadurch gekennzeichnet, dass** ein Teil der ferromagnetischen Stäbe (7, 19, 21) in einem Schweißschaft 23 angeordnet ist, wobei Letzterer ein Schirmelement, zum Beispiel aus Kupfer oder aus Aluminium umfasst, das so angeordnet ist, dass die Feldlinien in den ferromagnetischen Stäben (7, 19, 21) eingeschlossen sind.
